(19) Europäisches Patentamt
European Patent Office
Office européen des brevets

(11) **EP 4 691 674 A1**

(12) **EUROPEAN PATENT APPLICATION**
published in accordance with Art. 153(4) EPC

(43) Date of publication:
**11.02.2026 Bulletin 2026/07**

(21) Application number: **24780605.2**

(22) Date of filing: **28.03.2024**

(51) International Patent Classification (IPC):
**B23C 5/20** *(2006.01)*    **B23C 5/06** *(2006.01)*
**B23C 5/10** *(2006.01)*

(52) Cooperative Patent Classification (CPC):
**B23C 5/06; B23C 5/10; B23C 5/20**

(86) International application number:
**PCT/JP2024/012584**

(87) International publication number:
**WO 2024/204504 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023053265**

(71) Applicant: **MOLDINO Tool Engineering, Ltd.
Tokyo 130-0026 (JP)**

(72) Inventors:
• **UEMOTO, Sho
  Narita-shi, Chiba 286-0825 (JP)**
• **NAGASHIMA, Yoshimitsu
  Narita-shi, Chiba 286-0825 (JP)**
• **TAKAHASHI, Hayato
  Narita-shi, Chiba 286-0825 (JP)**
• **INAGAKI, Fumihiko
  Narita-shi, Chiba 286-0825 (JP)**

(74) Representative: **Hoffmann Eitle
Patent- und Rechtsanwälte PartmbB
Arabellastraße 30
81925 München (DE)**

(54) **CUTTING INSERT AND REPLACEABLE-EDGE ROTARY CUTTING TOOL**

(57)     A cutting insert (1) having a polygonal plate shape includes a rake face (2), a seating surface (3), a side surface (10, 10A, 10B), and a mounting hole (7) that is open to the rake face (2) and the seating surface (3) and that penetrates the cutting insert (1) in a thickness direction, in which a cutting edge portion (20) is provided on an intersecting ridgeline between the rake face (2) and the side surface (10, 10A, 10B), the cutting edge portion (20) includes a corner edge (24) and a main cutting edge (21) connected to the corner edge (24), the main cutting edge (21) is linear in both of a plan view in which the rake face (2) is viewed as a front and a side view in which the side surface (10B) is viewed as a front, the corner edge (24) includes a first arc edge connected to the main cutting edge (21) and an outermost peripheral arc edge located at an outermost peripheral portion in the corner edge, and the first arc edge and the outermost peripheral arc edge are arc-shaped cutting edges having different radii of curvature.

FIG. 3A

# Description

## TECHNICAL FIELD

The present invention relates to a cutting insert and an indexable rotary cutting tool.

Priority is claimed on Japanese Patent Application No. 2023-053265, filed March 29, 2023, the content of which is incorporated herein by reference.

## BACKGROUND ART

In the related art, an indexable rotary cutting tool including a cutting insert has been known. Patent Document 1 discloses a cutting insert capable of increasing the rigidity of a corner edge and improving the machining efficiency.

## CITATION LIST

## PATENT DOCUMENT

Patent Document 1: Japanese Unexamined Patent Application, First Publication No. 2022-151053 (A)

## SUMMARY OF INVENTION

## TECHNICAL PROBLEM

In rough machining in which a high load is applied to the cutting edge, high strength is required for both a main cutting edge and the corner edge. In order to improve the strength of the corner edge, it is effective to increase a radius of curvature of the corner edge. However, in a case where the radius of curvature of the corner edge is increased, a length of the main cutting edge is shortened. Since a temperature rise due to the cutting resistance is concentrated on the main cutting edge, there is an issue in that a local temperature rise occurs in a case where the main cutting edge is short, and the wear around the main cutting edge is likely to progress.

## SOLUTION TO PROBLEM

(1) An aspect of the present invention provides a cutting insert having a polygonal plate shape, including: a rake face configured to form one of a pair of polygonal surfaces; a seating surface configured to form the other of the pair of polygonal surfaces; a side surface configured to connect the rake face and the seating surface; and a mounting hole configured to be open to the rake face and the seating surface and to penetrate the cutting insert in a thickness direction, in which a cutting edge portion is provided on an intersecting ridgeline between the rake face and the side surface, the cutting edge portion includes a corner edge and a main cutting edge connected to the corner edge, the main cutting edge is linear in both of a plan view in which the rake face is viewed as a front and a side view in which the side surface is viewed as a front, the corner edge includes a first arc edge connected to the main cutting edge and an outermost peripheral arc edge located at an outermost peripheral portion in the corner edge, and the first arc edge and the outermost peripheral arc edge are arc-shaped cutting edges having different radii of curvature.

With this configuration, since the main cutting edges are linear in two directions perpendicular to each other, the entire main cutting edge in an extending direction is evenly cut into a workpiece during cutting. As a result, a temperature distribution in a case where the temperature of the cutting edge rises due to the cutting resistance is distributed over the entire main cutting edge. Since the local temperature rise does not occur in the main cutting edge, it is possible to suppress the wear of the rake face of the main cutting edge due to the temperature rise.

In addition, by configuring the corner edge with the arc-shaped cutting edges having different radii of curvature, the outermost peripheral arc edge having a large radius of curvature can be disposed at the outermost peripheral portion of the corner edge, and the outermost peripheral arc edge and the main cutting edge can be connected to each other at a short distance by the first arc edge having a relatively small radius of curvature. By disposing the arc-shaped cutting edge having a large radius of curvature on the outermost periphery, the strength of the corner edge can be improved. In addition, by shortening the connection length between the outermost peripheral arc edge and the main cutting edge, the length of the main cutting edge can be secured to be larger. By increasing the length of the main cutting edge, a temperature rise region is more widely distributed, and the local temperature rise can be suppressed, so that the wear of the rake face can be further reduced.

With the present configuration, the cutting insert capable of high-efficiency machining, in which the temperature rise of the main cutting edge can be suppressed while securing the strength of the corner edge, is provided.

(2) According to (1), a radius of curvature Rout of the outermost peripheral arc edge may be largest among radii of curvature of a plurality of arc-shaped cutting edges forming the corner edge, and in a case where a cutting edge length of an entire corner edge is denoted by L2 and a cutting edge length of the outermost peripheral arc edge is denoted by Lout, L2 - Lout < Lout may be satisfied.

(3) According to (1) or (2), the corner edge may consist of only arc-shaped cutting edges having two types of radii of curvature.

(4) According to any one of (1) to (3), the main cutting edge may be a linear cutting edge, and in a case where a cutting edge length of the main cutting edge is denoted by L1 and an inscribed circle diameter of the rake face is denoted by D1, $0.35 \times D1 \leq L1 \leq 0.60 \times D1$ may be satisfied.

(5) According to any one of (1) to (4), the seating surface and the cutting edge portion may be parallel to each other in the side view, the cutting edge portion may include the corner edge, the main cutting edge, a wiper edge adjacent to a side of the main cutting edge opposite to the corner edge, and an inner peripheral arc edge adjacent to a side of the wiper edge opposite to the main cutting edge, and in a case where a cutting edge length of the main cutting edge is denoted by L1 and a cutting edge length of the wiper edge is denoted by L3, $0.25 \leq L3/L1 \leq 0.50$ may be satisfied.

(6) According to any one of (1) to (5), a radius of curvature Rout of the outermost peripheral arc edge may be an integral multiple of 1 mm.

(7) According to any one of (1) to (6), in the plan view, a virtual line VL perpendicular to the main cutting edge may be defined from a center line of the mounting hole, and in a case where an intersection of the virtual line VL and the main cutting edge may be defined as a point S and an intersection of the virtual line VL and an outer peripheral edge of the mounting hole is defined as a point T, a shortest distance L5 between the point S and the point T may be larger than a distance L6 from a center line O1 to the point T.

(8) According to any one of (1) to (7), the indexable cutting tool may further include: a peripheral cutting edge configured to be connected to a side of the corner edge opposite to the main cutting edge, in which the outermost peripheral arc edge and the peripheral cutting edge are smoothly connected to each other, the first arc edge and the main cutting edge are smoothly connected to each other, and the main cutting edge and the wiper edge are connected to each other via a convex curved edge that protrudes toward a radially outer side of a center line of the mounting hole.

(9) An indexable rotary cutting tool including: the cutting insert according to any one of (1) to (8); and a holder in which the cutting insert is attachably and detachably mounted and that is configured to rotate about a rotation axis, in which the holder includes an insert mounting seat that comes into contact with a flank face for the wiper edge of the cutting insert and with the seating surface.

(10) Another aspect of the present invention provides an indexable rotary cutting tool including: a cutting insert having a polygonal plate shape; and a holder in which the cutting insert is attachably and detachably mounted and that is configured to rotate about a rotation axis, in which the cutting insert includes a rake face configured to form one of a pair of polygonal surfaces, a seating surface configured to form the other of the pair of polygonal surfaces, a side surface configured to connect the rake face and the seating surface, and a mounting hole configured to be open to the rake face and the seating surface and to penetrate the cutting insert in a thickness direction, a cutting edge portion is provided on an intersecting ridgeline between the rake face and the side surface, the cutting edge portion includes a corner edge and a main cutting edge connected to the corner edge, the main cutting edge is linear in both of a plan view in which the rake face is viewed as a front and a side view in which the side surface is viewed as a front, the corner edge includes a first arc edge connected to the main cutting edge and an outermost peripheral arc edge located at an outermost peripheral portion in the corner edge, the first arc edge and the outermost peripheral arc edge are arc-shaped cutting edges having different radii of curvature in a tool rotation trajectory, and the holder includes an insert mounting seat that comes into contact with a flank face for the wiper edge of the cutting insert and the seating surface.

(10) may include any one of (2) to (8).

Advantageous Effects of Invention

According to the aspects of the present invention, it is possible to provide the cutting insert capable of high-efficiency machining, in which the temperature rise of the main cutting edge can be suppressed while securing the strength of the corner edge, and the indexable rotary cutting tool including the cutting insert.

BRIEF DESCRIPTION OF DRAWINGS

[FIG. 1] A perspective view showing a cutting insert according to an embodiment.
[FIG. 2] A plan view showing a configuration of a rake face of the cutting insert shown in FIG. 1.
[FIG. 3A] An enlarged partial plan view showing the cutting insert.
[FIG. 3B] An enlarged partial plan view showing the cutting insert.
[FIG. 4] A side view showing a configuration of a side surface of the cutting insert.
[FIG. 5A] A cross-sectional view of the cutting insert taken along a Va-Va line of FIG. 2.
[FIG. 5B] A cross-sectional view of the cutting insert taken along a Vb-Vb line of FIG. 2.
[FIG. 6] A side view of an indexable rotary cutting tool.
[FIG. 7] A perspective view of the indexable rotary cutting tool.

[FIG. 8] A perspective view showing a holder in a state where a cutting insert is removed.

DESCRIPTION OF EMBODIMENTS

Hereinafter, an embodiment to which the present invention is applied will be described in detail with reference to accompanying drawings. In the drawings used in the following description, a portion that is not a feature may be omitted for sake of convenience in order to make the feature portion easy to understand.

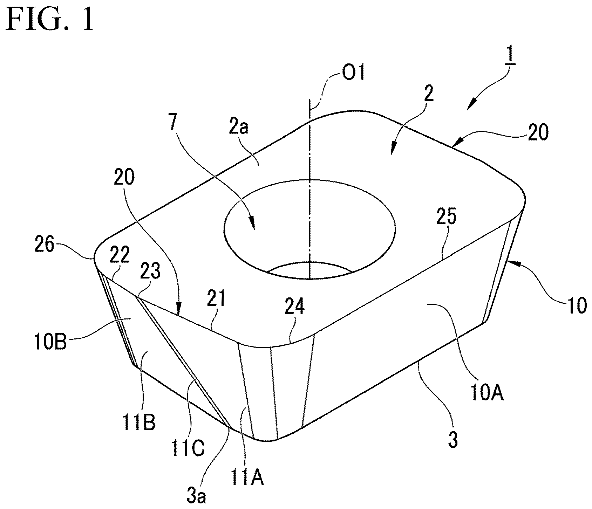

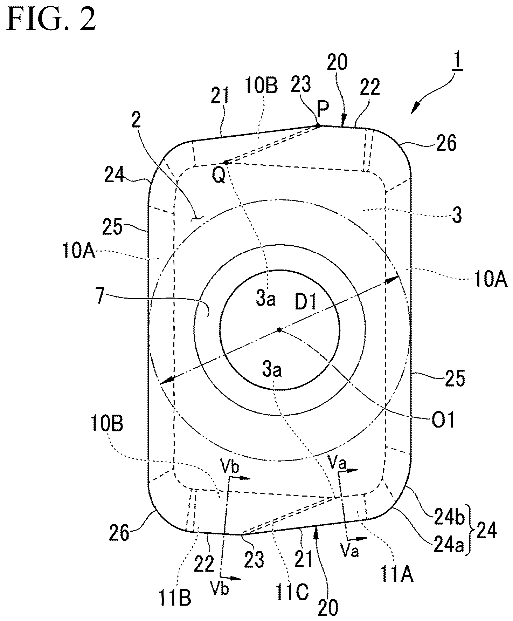

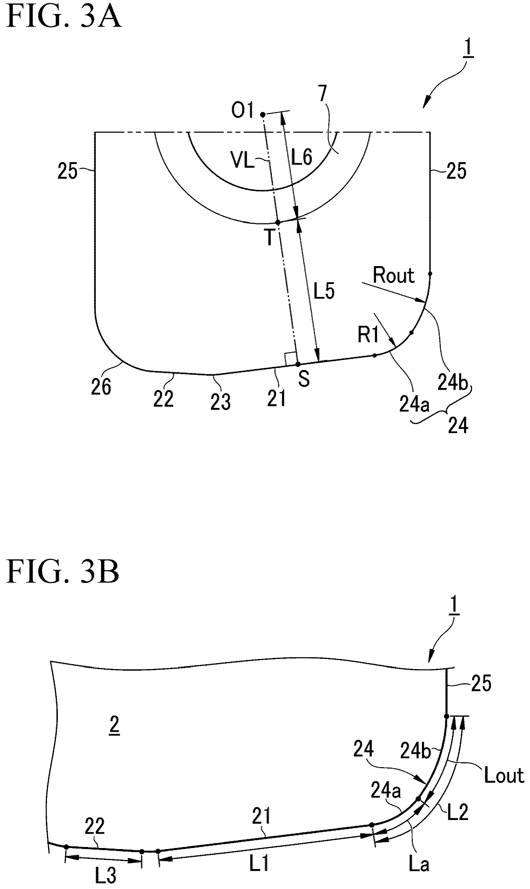

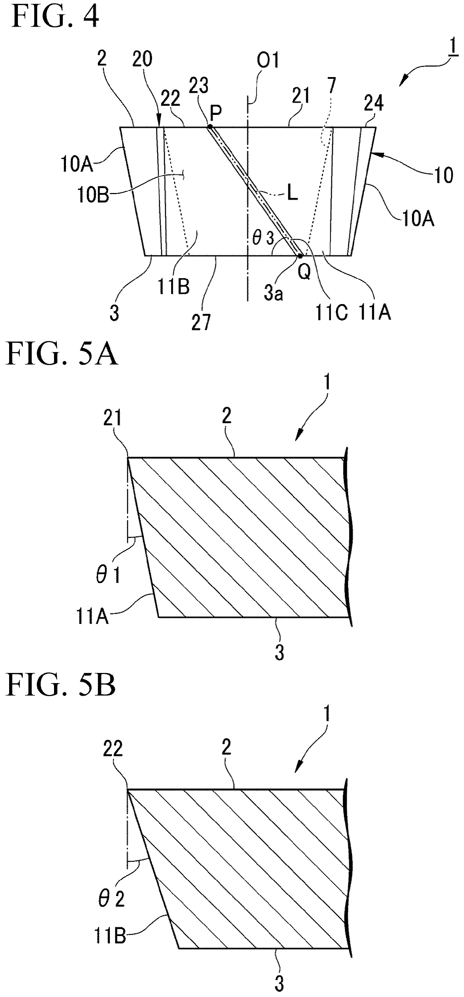

FIG. 1 is a perspective view showing a cutting insert 1 according to the embodiment. FIG. 2 is a plan view showing a configuration of a rake face 2 of the cutting insert 1 shown in FIG. 1. FIG. 3A is a partially enlarged plan view of the cutting insert 1 in FIG. 2. FIG. 3B is a partially enlarged plan view of the cutting insert 1 shown in FIG. 3A. FIG. 4 is a side view showing a configuration of a side surface 10 of the cutting insert 1.

The cutting insert 1 has a polygonal plate shape (quadrangular plate shape in the present embodiment) that is rotationally symmetrical with respect to a center line O1 extending in a thickness direction. In the present embodiment, the center line O1 is a central axis line of a mounting hole 7 that penetrates the cutting insert 1 in the thickness direction. In the following description, a direction along the center line O1 may be simply referred to as the thickness direction. In addition, a direction perpendicular to the center line O1 may be simply referred to as a radial direction. Similarly, a circumferential direction about an axis centered on the center line O1 may be simply referred to as a circumferential direction.

The cutting insert 1 includes the rake face 2 that forms one of a pair of polygonal surfaces, a seating surface 3 that forms the other of the pair of polygonal surfaces, the side surface 10 that connects the rake face 2 and the seating surface 3, and the mounting hole 7 for mounting in a holder. As shown in FIG. 2, the rake face 2 and the seating surface 3 are formed in a substantially quadrangular shape. The seating surface 3 is included inside a projection region of the rake face 2 in the thickness direction. The side surface 10 includes two side surfaces 10A that are continuous to long sides of the rake face 2 and two side surfaces 10B that are continuous to short sides of the rake face 2.

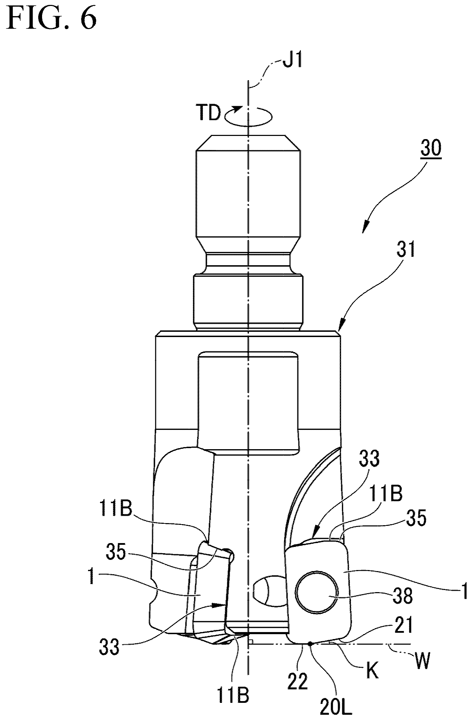

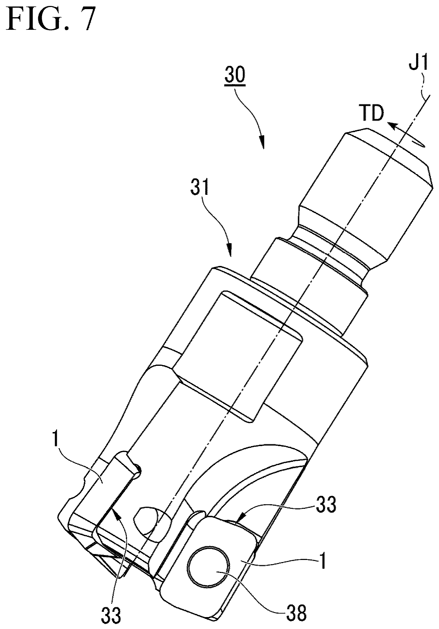

As shown in FIGS. 6 and 7 described later, the cutting insert 1 is attachably and detachably mounted in a tip end portion of a holder 31 by a clamp screw 38. Therefore, on the rake face 2 and the seating surface 3, the mounting hole 7 penetrating the cutting insert 1 in the thickness direction is formed. The clamp screw 38 is inserted into the mounting hole 7. The mounting hole 7 extends along the center line O1 of the cutting insert 1. The mounting hole 7 is a tapered through-hole with the center line O1 as a central axis.

The rake face 2 includes a reference plane 2a parallel to the seating surface 3. A cutting edge portion 20 is provided on an intersecting ridgeline between the rake face 2 and the side surface 10. The cutting edge portion 20 includes a peripheral cutting edge 25, a corner edge 24, a main cutting edge 21, a wiper edge 22, and an inner peripheral arc edge 26.

The main cutting edge 21 and the wiper edge 22 are provided on an intersecting ridgeline with the side surface 10B continuous to the short side of the rake face 2. The peripheral cutting edge 25 is provided on an intersecting ridgeline with the side surface 10A continuous to the long side of the rake face 2. The corner edge 24 is provided between the main cutting edge 21 and the peripheral cutting edge 25. The inner peripheral arc edge 26 is provided on a side of the wiper edge 22 opposite to the main cutting edge 21. The inner peripheral arc edge 26 is located at a corner portion of the rake face 2. That is, the corner edges 24 are disposed at two corner portions at opposite positions among four corner portions of the rake face 2, and the inner peripheral arc edges 26 are disposed at the other two corner portions. In the present embodiment, the cutting edge portion 20 includes a convex curved edge 23 that connects the main cutting edge 21 and the wiper edge 22. In the plan view of the rake face 2, the peripheral cutting edge 25, the corner edge 24, the main cutting edge 21, the convex curved edge 23, the wiper edge 22, and the inner peripheral arc edge 26 are disposed in this order rightward (clockwise).

In the cutting insert 1 of the present embodiment, two cutting edge portions 20 are provided at intervals of 180° in the circumferential direction with the center line O1 as a center. The two cutting edge portions 20 are disposed rotationally symmetrically about the center line O1.

The main cutting edge 21 is located on the short side of the rake face 2 and extends linearly in the plan view of the rake face 2. The main cutting edge 21 is the longest among the cutting edges forming the cutting edge portion 20. The main cutting edge 21 is directed to a rotational direction TD side of the holder 31 and faces a workpiece in a state where the cutting insert 1 is mounted in the holder 31 (see FIGS. 6 and 7).

In the present embodiment, as shown in FIGS. 2 and 4, the main cutting edge 21 is linear in both of the plan view (FIG. 2) of the rake face 2 and the side view (FIG. 4) in which the side surface 10B is viewed from the front side.

In the present specification, the cutting edge being "linear" includes not only a completely linear shape but also a substantially linear shape within a certain error range. Specifically, in a case of a cutting insert in which a length of the main cutting edge 21 is approximately 3 mm, a gentle arc shape in which the radius of curvature is more than 50 mm or a curved shape that meanders with a meandering width of 0.05 mm or less is also included in the "linear" in the present specification.

The corner edge 24 is continuous to the main cutting edge 21 and is located at a corner portion of the rake face 2. The corner edge 24 has a composite arc shape consisting of a plurality of arcs in the plan view shown in FIG. 2. On the other hand, the main cutting edge 21 extends linearly. Therefore, a boundary between the corner edge 24 and the main cutting edge 21 is determined by a boundary between the linear portion and the arc shape portion in the cutting edge portion 20.

As shown in an enlarged view of FIG. 3A, the corner edge 24 includes a first arc edge 24a connected to the main cutting edge 21 and an outermost peripheral arc edge 24b located at an outermost peripheral portion in the corner edge 24. The first arc edge 24a and the outermost peripheral arc edge 24b are arc-shaped cutting edges having different radii of curvature. A radius of curvature Rout of the outermost peripheral arc edge 24b is larger than a radius of curvature R1 of the first arc edge 24a.

In addition, in a case where the cutting insert 1 of the present embodiment is mounted in the holder 31 to form an indexable cutting tool, the first arc edge 24a and the outermost peripheral arc edge 24b may be arc-shaped cutting edges having different radii of curvature in a tool rotation trajectory. Even in this case, the radius of curvature Rout of the outermost peripheral arc edge 24b is larger than the radius of curvature R1 of the first arc edge 24a.

As described above, in the cutting insert 1 of the present embodiment, the main cutting edge 21 is linear in both of the plan view of the rake face 2 and the side view in which the side surface 10B is viewed from the front side, the corner edge 24 includes the first arc edge 24a connected to the main cutting edge 21 and the outermost peripheral arc edge 24b located at the outermost peripheral portion in the corner edge 24, and the first arc edge 24a and the outermost peripheral arc edge 24b are arc-shaped cutting edges having different radii of curvature.

With this configuration, since the main cutting edge 21 is linear in any of a front direction of the rake face 2 and a direction perpendicular to the rake face 2, the entire main cutting edge 21 in the extending direction is evenly cut into the workpiece during cutting. As a result, a temperature distribution in a case where the temperature of the cutting edge rises due to the cutting resistance is distributed over the entire main cutting edge 21. Since the local temperature rise does not occur in the main cutting edge 21, it is possible to suppress the wear of the rake face and the flank face of the main cutting edge 21 due to the temperature rise.

In addition, by configuring the corner edge 24 with the arc-shaped cutting edges having different radii of curvature, the outermost peripheral arc edge 24b having a large radius of curvature can be disposed at the outermost peripheral portion of the corner edge 24, and the outermost peripheral arc edge 24b and the main cutting edge 21 can be connected to each other at a short distance by the first arc edge 24a having a relatively small radius of curvature. By disposing the arc-shaped cutting edge having a large radius of curvature on the outermost periphery, the strength of the corner edge 24 can be improved. In addition, by shortening the connection length between the outermost peripheral arc edge 24b and the main cutting edge 21, the length of the main cutting edge 21 can be secured to be larger. By increasing the length of the main cutting edge 21, a temperature rise region is more widely distributed, and the local temperature rise can be suppressed, so that the wear of the rake face and the flank face can be further reduced.

According to the present embodiment, the cutting insert 1 capable of high-efficiency machining, in which the temperature rise of the main cutting edge 21 can be suppressed while securing the strength of the corner edge 24, is provided.

In addition, in the present embodiment, as shown in FIG. 3A, the radius of curvature Rout of the outermost peripheral arc edge 24b is the largest among the radii of curvature of the plurality of arc-shaped cutting edges (the first arc edge 24a and the outermost peripheral arc edge 24b) forming the corner edge. As shown in FIG. 3B, in a case where a cutting edge length of the entire corner edge 24 is denoted by L2 and a cutting edge length of the outermost peripheral arc edge is denoted by Lout, L2 - Lout < Lout is satisfied. In a case of the present embodiment, L2 - Lout matches a length La of the first arc edge 24a, but in a case where the corner edge 24 is composed of three or more arc-shaped cutting edges, L2 - Lout is the total length of the cutting edges other than the outermost peripheral arc edge 24b. That is, it is preferable that the length of the outermost peripheral arc edge 24b is larger than the total length of the other arc-shaped cutting edges forming the corner edge 24.

With this configuration, both the radius of curvature and the length of the outermost peripheral arc edge 24b located at the outermost peripheral portion of the corner edge 24 are increased, so that the strength of the outermost peripheral arc edge 24b to which a load is applied during cutting can be increased. The strength of the entire corner edge 24 can be increased, and the life of the cutting insert 1 can be extended.

In a case of the present embodiment, the corner edge 24 consists of only the first arc edge 24a and the outermost peripheral arc edge 24b. That is, the corner edge 24 consists of only arc-shaped cutting edges having two types of radii of curvature. The shape of the corner edge 24 is not excessively complicated, and the cutting insert 1 that is easily manufactured can be obtained.

It is preferable that the radius of curvature Rout of the outermost peripheral arc edge 24b is an integral multiple of 1 mm. With this configuration, in computer aided manufacturing (CAM), the calculation of the machining step by the outermost peripheral arc edge 24b is simplified, so that it is easy to set the machining conditions.

The wiper edge 22 is located on a side of the main cutting edge 21 opposite to the corner edge 24. The wiper edge 22 is a linear cutting edge extending in a direction intersecting the main cutting edge 21. The wiper edge 22 extends in an inclined manner to be closer to the center line O1 as the wiper edge 22 is separated from the main cutting edge 21 in the extending direction of the main cutting edge 21. Therefore, a boundary portion between the main cutting edge 21 and the wiper edge 22 has a shape protruding outward. In the present embodiment, the convex curved edge 23 is provided between the main cutting edge 21 and the wiper edge 22. The convex curved edge 23 may have an arc shape or a curved shape other than the arc.

The cutting insert 1 of the present embodiment includes the peripheral cutting edge 25 connected to a side of the corner edge 24 opposite to the main cutting edge 21, the outermost peripheral arc edge 24b and the peripheral cutting edge 25 are smoothly connected to each other, the first arc edge 24a and the main cutting edge 21 are smoothly connected to each other, and the main cutting edge 21 and the wiper edge 22 are connected to each other via the convex curved edge 23 that protrudes toward the radially outer side of the center line O1 of the mounting hole 7. In the present specification, the phrase "smoothly connected" means a connection form in which directions of tangents of two cutting edges match at a connection point of the two cutting edges, that is, a tangential connection.

With this configuration, since the plurality of cutting edges are smoothly connected to each other without a step, good machining surface accuracy can be obtained.

Since the cutting insert 1 in the present embodiment is a positive type cutting insert, as shown in FIGS. 1 and 4, the side surface 10B continuous to the cutting edge portion 20, that is, the flank face of the cutting edge portion 20 is an inclined face along a substantially flank angle. The flank face of the cutting edge portion 20 connects the rake face 2 and the seating surface 3.

The side surface 10B mainly forms the flank face of the main cutting edge 21 and the wiper edge 22. The side surface 10B has a first side surface 11A continuous to the main cutting edge 21 and a second side surface 11B continuous to the wiper edge 22. The first side surface 11A and the second side surface 11B are laterally partitioned by a boundary region 11C extending between the rake face 2 and the seating surface 3 in the side view. In the present embodiment, the boundary region 11C is continuous to the convex curved edge 23.

The boundary region 11C is a boundary ridgeline portion between the first side surface 11A and the second side surface 11B. In the present embodiment, the boundary region 11C is formed in a convex curved surface shape to smoothly connect the first side surface 11A and the second side surface 11B. The convex curved edge 23 continuous to the boundary region 11C also has a convex curved shape. The width of the boundary region 11C in the side view is increased or decreased in accordance with the convex curved surface shape. The widths of the convex curved edge 23 and the boundary region 11C are not particularly limited and can be adjusted as appropriate based on a state of the machining surface of the workpiece and the like.

Here, FIG. 5A is a cross-sectional view of the cutting insert 1 taken along a Va-Va line of FIG. 2. FIG. 5B is a cross-sectional view of the cutting insert 1 taken along a Vb-Vb line of FIG. 2. The Va-Va line is perpendicular to the main cutting edge 21, and the Vb-Vb line is perpendicular to the wiper edge 22.

Here, $\theta1$ shown in FIG. 5A is a flank angle of the main cutting edge 21, and $\theta2$ shown in FIG. 5B is a flank angle of the wiper edge 22. As shown in these drawings, the flank angle $\theta2$ of the wiper edge 22 is larger than the flank angle $\theta1$ of the main cutting edge 21. That is, the flank angle $\theta1$ of the main cutting edge 21 and the flank angle $\theta2$ of the wiper edge 22 satisfy a relationship of $\theta1 < \theta2$.

Since the flank angle $\theta1$ of the main cutting edge 21 and the flank angle $\theta2$ of the wiper edge 22 are different from each other, the flank angle $\theta1$ and the flank angle $\theta2$ can be individually designed. As a result, in a case where the flank angle $\theta1$ of the main cutting edge 21 is set to be small, the edge tip strength of the main cutting edge 21 can be secured. In addition, in a case where the flank angle $\theta2$ of the wiper edge 22 is set to be large, the wear of the second side surface 11B, which is the flank face of the wiper edge 22, can be suppressed. Since both the edge tip strength of the main cutting edge 21 and the wear resistance of the wiper edge 22 can be achieved, the cutting insert 1 with a long life can be obtained.

Since a magnitude relationship between the flank angles $\theta1$ and $\theta2$ is defined as described above, as shown in FIG. 4, the boundary region 11C that partitions the first side surface 11A and the second side surface 11B extends obliquely with respect to the center line O1 in the side surface 10B. Accordingly, the width of the first side surface 11A in a direction along the short side of the rake face 2 gradually decreases from the rake face 2 toward the seating surface 3. On the other hand, the width of the second side surface 11B in a direction along the short side of the rake face 2 gradually increases from the rake face 2 toward the seating surface 3.

In the present embodiment, it is preferable that the flank angles $\theta1$ and $\theta2$ satisfy $8° \leq \theta1 \leq 18°$ and $12° \leq \theta2 \leq 25°$.

By setting the flank angle $\theta1$ to be in the above-described range, it is possible to secure the edge tip strength of the main cutting edge 21 while suppressing the contact between the flank face of the main cutting edge 21 and the surface of the workpiece. As a result, high-efficiency machining is facilitated. The flank angle $\theta1$ is more preferably 9° or more. The flank angle $\theta1$ is more preferably 15° or less.

By setting the flank angle $\theta2$ to be in the above-described range, the wear of the flank face of the wiper edge 22 can be suppressed, and a high-quality machining surface can be obtained. In addition, since the cutting insert 1 can secure the strength of the edge tip of the cutting insert 1 and the entire cutting insert 1, the occurrence of the fracture to the cutting insert 1 can be suppressed, and the life can be extended. More preferably, the flank angle θ2 is 15° or more. The flank angle θ2 is more preferably 20° or less.

In the present embodiment, as shown in FIG. 4, in a case where an end point of the boundary region 11C, which extends obliquely with respect to the center line O1, on the rake face 2 side is defined as an end point P and an end point of the boundary region 11C on the seating surface 3 side is defined as an end point Q, the end point P is located at a position farther from the corner edge 24 than the center line O1 in the side view of the side surface 10B.

In the present embodiment, the end point P is defined as a center point of a cutting edge length of the convex curved edge 23. In addition, the end point Q is defined as a center point of a ridgeline length of a ridgeline 3a formed at an intersection portion between the boundary region 11C and the seating surface 3.

Since the end point P is located at a position farther from the corner edge 24 than the center line O1 in the side view of the side surface 10B, the entire convex curved edge 23, which is the intersection region between the boundary region 11C and the rake face 2, is located at a position farther from the corner edge 24 than the center line O1. As a result, the linear main cutting edge 21 is configured to extend to a position farther from the corner edge 24 than the center line O1. The linear main cutting edge 21 has a larger range of cutting into the workpiece than the arc-shaped cutting edge, and heat due to friction with the workpiece is dispersed over a wide range of the main cutting edge 21 in a length direction. Therefore, the local temperature rise is less likely to occur as compared with the arc-shaped main cutting edge, and the effect of suppressing the wear of the rake face and the flank face due to heat can be obtained. In the present embodiment, since the length of the linear main cutting edge 21 is increased by the above-described configuration, the temperature rise during a cutting operation can be further suppressed, and the wear of the rake face and the flank face can be further reduced.

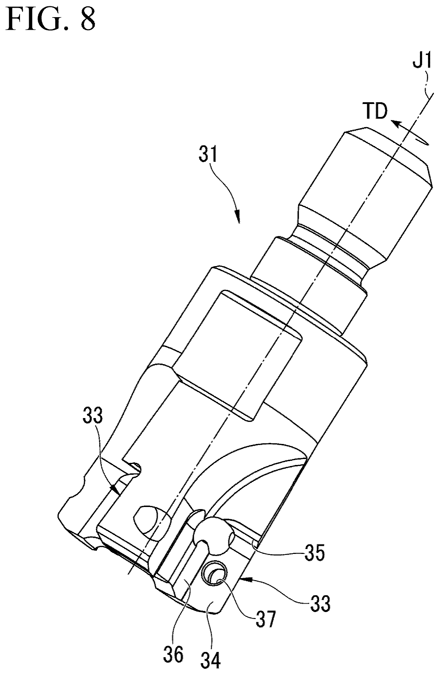

FIGS. 6 and 7 are perspective views showing a configuration of an indexable rotary cutting tool 30 having a plurality of cutting inserts 1 and the holder 31 in which the cutting inserts 1 are attachably and detachably mounted. FIG. 8 is a perspective view showing the holder 31 in a state where the cutting insert 1 is removed.

The indexable rotary cutting tool 30 performs the cutting operation by rotating the holder 31 in the rotational direction TD about a rotation axis J1. The indexable rotary cutting tool 30 includes the holder 31 that rotates about the rotation axis J1, and three cutting inserts 1 mounted in the holder 31.

As shown in FIG. 8, three insert mounting seats 33 are provided at the tip end portion of the holder 31. The insert mounting seat 33 has a mounting seat bottom surface 34 and two mounting seat wall surfaces 35 and 36.

The mounting seat bottom surface 34 has a rectangular shape having an area substantially equal to an area of the seating surface 3 of the cutting insert 1 and is directed to the rotational direction TD. The mounting seat wall surface 35 is a surface facing the tip side in the rotation axis J1 direction, and extends in the radial direction of the holder 31 along the short side of the mounting seat bottom surface 34. The mounting seat wall surface 36 is a surface facing the outer side in the radial direction of the holder 31 and extends in the rotation axis J1 direction along the long side of the mounting seat bottom surface 34. A screw hole 37 is formed substantially at the center of the mounting seat bottom surface 34.

The mounting seat bottom surface 34 faces and comes into contact with the seating surface 3 of the cutting insert 1. The mounting seat wall surface 35 faces and comes into contact with the side surface 10B of the cutting insert 1. The mounting seat wall surface 36 faces and comes into contact with the side surface 10A of the cutting insert 1.

The cutting insert 1 is mounted in the insert mounting seat 33 of the holder 31 by using the clamp screw 38. The cutting insert 1 is mounted in the holder 31 by clamping the clamp screw 38 inserted into the mounting hole 7 to the screw hole 37 formed at the center of the mounting seat bottom surface 34.

In the cutting insert 1 of the present embodiment, the seating surface 3 is closely mounted in the mounting seat bottom surface 34 of the holder 31, and the side surfaces 10A and 10B are fixed by being brought into contact with the mounting seat wall surfaces 36 and 35, respectively. Further, by tightening the clamp screw 38 in the screw hole 37, the seating surface 3 is pressed against the mounting seat bottom surface 34, and the side surfaces 10A and 10B are pressed against the mounting seat wall surfaces 36 and 35.

In a case of the present embodiment, as shown in FIGS. 6 and 7, in a case where the cutting insert 1 is mounted in the holder 31, the second side surface 11B of the side surface 10B of the cutting insert 1 is pressed against the mounting seat wall surface 35 facing the tip side of the holder 31. That is, the second side surface 11B, which is the flank face of the wiper edge 22, serves as a restraining portion.

In the cutting insert 1, as shown in FIG. 4, since the flank angle θ2 of the second side surface 11B is formed to be larger than the flank angle θ1 of the first side surface 11A, the width of the second side surface 11B in a direction perpendicular to the center line O1 is increased toward the seating surface 3. With this configuration, the area of the second side surface 11B can be secured to be larger as compared with a case where the boundary region 11C extends in parallel with the center line O1. That is, the area of the second side surface 11B used as a restraining surface of the cutting insert 1 to the holder 31 can be secured to be large. Since a contact area between the second side surface 11B and the mounting seat wall surface 35 can be increased, a restraining force of the cutting insert 1 to the holder 31 can be increased.

In addition, in the present embodiment, it is preferable that the end point Q shown in FIG. 4 is located on a side (right side in the drawing) closer to the corner edge 24 than the center line O1. Accordingly, the width of the second side surface 11B in a direction perpendicular to the center line O1 can be secured to be larger, and thus the restraining force of the cutting insert 1 to the holder 31 can be further increased.

In the present embodiment, as shown in FIG. 4, in the side view of the side surface 10B of the cutting insert 1, it is preferable that an angle θ3 formed between a straight line L connecting the end point P and the end point Q and the seating surface 3 satisfies $45° \leq θ3 \leq 85°$.

By setting the angle θ3 to 45° or more, the length of the linear main cutting edge 21 can be sufficiently secured, and thus a radial cutting depth ae can be made large, and high-efficiency machining can be performed. In addition, since the linear main cutting edge 21 is lengthened, the temperature rise during cutting can be suppressed, and the life of the cutting insert 1 is extended. More preferably, the angle θ3 is 50° or more.

By setting the angle θ3 to 85° or less, the area of the second side surface 11B can be sufficiently secured to be large, and the area of the restraining portion between the cutting insert 1 and the holder 31 can be increased. The cutting insert 1 can be firmly restrained, and thus high-efficiency machining can be easily performed. More preferably, the angle θ3 is 80° or less.

In the present embodiment, it is preferable that the main cutting edge 21 is a linear cutting edge, and in a case where a cutting edge length of the main cutting edge 21 is denoted by L1 and an inscribed circle diameter of the rake face 2 is denoted by D1, $0.35 \times D1 \leq L1 \leq 0.60 \times D1$ is satisfied.

By setting the cutting edge length L1 of the main cutting edge 21 to $0.35 \times D1$ or more, the length of the linear main cutting edge 21 can be sufficiently secured, and thus the radial cutting depth ae can be made large, and high-efficiency machining can be performed. In addition, since the linear main cutting edge 21 is lengthened, the temperature rise during cutting can be suppressed, and the life of the cutting insert 1 is extended. More preferably, the cutting edge length L1 is $0.40 \times D1$ or more. By setting the cutting edge length L1 of the main cutting edge 21 to $0.60 \times D1$ or less, the area of the second side surface 11B can be sufficiently secured to be large, and the area of the restraining portion between the cutting insert 1 and the holder 31 can be made large. The cutting insert 1 can be firmly restrained, and thus high-efficiency machining can be easily performed. More preferably, the cutting edge length L1 is $0.55 \times D1$ or less.

In the present embodiment, as shown in FIG. 4, the seating surface 3 and the cutting edge portion 20 are parallel to each other in the side view in which the side surface 10B is viewed from the front side. In addition, as shown in FIGS. 3A and 3B, the cutting edge portion 20 includes the corner edge 24, the main cutting edge 21, the wiper edge 22 adjacent to a side of the main cutting edge 21 opposite to the corner edge 24, and the inner peripheral arc edge 26 adjacent to a side of the wiper edge 22 opposite to the main cutting edge 21. In addition, in a case where the cutting edge length of the main cutting edge 21 is denoted by L1 and the cutting edge length of the wiper edge 22 is denoted by L3, it is preferable that $0.25 \leq L3/L1 \leq 0.50$ is satisfied.

By setting the length L3 of the wiper edge 22 to be 0.25 times or more the length of the main cutting edge 21, the linear wiper edge 22 is also lengthened. Finish machining of the machining surface can be efficiently performed. The wear of the wiper edge 22 can also be suppressed. More preferably, L3/L1 is 0.30 or more. In a case where the wiper edge 22 is excessively long, the main cutting edge 21 is short, so that the length of the wiper edge 22 is preferably 0.50 times or less the length of the main cutting edge 21. More preferably, L3/L1 is 0.45 or less.

In the present embodiment, as shown in FIG. 3A, in the plan view of the rake face 2 of the cutting insert 1, a virtual line VL perpendicular to the main cutting edge 21 is defined from the center line O1 of the mounting hole 7, and in a case where an intersection of the virtual line VL and the main cutting edge 21 is defined as a point S and an intersection of the virtual line VL and an outer peripheral edge of the mounting hole 7 is defined as a point T, it is preferable that a shortest distance L5 between the point S and the point T is larger than a distance L6 from a center line O1 to the point T.

With this configuration, since a sufficient distance can be provided between the main cutting edge 21 to which the load is applied during the cutting operation and the peripheral edge of the mounting hole 7 located near the fulcrum of the load, the cutting insert 1 can be prevented from being broken.

The embodiment of the present invention has been described above, but the configurations and the combination thereof in the embodiment are merely examples, and additions, omissions, substitutions, and other changes of configuration can be made without departing from the gist of the present invention. Further, the present invention is not limited by the embodiment.

INDUSTRIAL APPLICABILITY

It is possible to provide the cutting insert capable of high-efficiency machining, in which the temperature rise of the main cutting edge can be suppressed while securing the strength of the corner edge, and the indexable rotary cutting tool including the cutting insert.

REFERENCE SIGNS LIST

    1 Cutting insert
    2 Rake face
    3 Seating surface

7 Mounting hole
10, 10A, 10B Side surface
11A First side surface
11B Second side surface
11C Boundary region
20 Cutting edge portion
20L Tool's lowest point
21 Main cutting edge
22 Wiper edge
24 Corner edge
30 Indexable rotary cutting tool
31 Holder
33 Insert mounting seat
J1 Rotation axis
L1 Cutting edge length
O1 Center line
P, Q End point
θ1, θ2 Flank angle
θ3 Angle of straight line L

**Claims**

1. A cutting insert having a polygonal plate shape, comprising:

   a rake face configured to form one of a pair of polygonal surfaces;
   a seating surface configured to form the other of the pair of polygonal surfaces;
   a side surface configured to connect the rake face and the seating surface; and
   a mounting hole configured to be open to the rake face and the seating surface and to penetrate the cutting insert in a thickness direction,
   wherein a cutting edge portion is provided on an intersecting ridgeline between the rake face and the side surface,
   the cutting edge portion includes a corner edge and a main cutting edge connected to the corner edge,
   the main cutting edge is linear in both of a plan view in which the rake face is viewed as a front and a side view in which the side surface is viewed as a front,
   the corner edge includes a first arc edge connected to the main cutting edge and an outermost peripheral arc edge located at an outermost peripheral portion in the corner edge, and
   the first arc edge and the outermost peripheral arc edge are arc-shaped cutting edges having different radii of curvature.

2. The cutting insert according to Claim 1,

   wherein a radius of curvature Rout of the outermost peripheral arc edge is largest among radii of curvature of a plurality of arc-shaped cutting edges forming the corner edge, and
in a case where a cutting edge length of an entire corner edge is denoted by L2 and a cutting edge length of the outermost peripheral arc edge is denoted by Lout,

$$L2 - Lout < Lout$$

is satisfied.

3. The cutting insert according to Claim 1 or 2, wherein the corner edge consists of only arc-shaped cutting edges having two types of radii of curvature.

4. The cutting insert according to Claim 1 or 2,

   wherein the main cutting edge is a linear cutting edge, and
   in a case where a cutting edge length of the main cutting edge is denoted by L1 and an inscribed circle diameter of the rake face is denoted by D1,

$$0.35 \times D1 \leq L1 \leq 0.60 \times D1$$

is satisfied.

5. The cutting insert according to Claim 1 or 2,

   wherein the seating surface and the cutting edge portion are parallel to each other in the side view, the cutting edge portion includes the corner edge, the main cutting edge, a wiper edge adjacent to a side of the main cutting edge opposite to the corner edge, and an inner peripheral arc edge adjacent to a side of the wiper edge opposite to the main cutting edge, and
   in a case where a cutting edge length of the main cutting edge is denoted by L1 and a cutting edge length of the wiper edge is denoted by L3,

$$0.25 \leq L3/L1 \leq 0.50$$

is satisfied.

6. The cutting insert according to Claim 1 or 2, wherein a radius of curvature Rout of the outermost peripheral arc edge is an integral multiple of 1 mm.

7. The cutting insert according to Claim 1 or 2,

   wherein in the plan view, a virtual line VL perpendicular to the main cutting edge is defined from a center line of the mounting hole, and
   in a case where an intersection of the virtual line VL and the main cutting edge is defined as a point S and an intersection of the virtual line VL and an outer peripheral edge of the mounting hole is defined as a point T,
a shortest distance L5 between the point S and the point T is larger than a distance L6 from a center line O1 to the point T.

8. The cutting insert according to Claim 1 or 2, further comprising:

a peripheral cutting edge configured to be connected to a side of the corner edge opposite to the main cutting edge,
wherein the outermost peripheral arc edge and the peripheral cutting edge are smoothly connected to each other,
the first arc edge and the main cutting edge are smoothly connected to each other, and
the main cutting edge and the wiper edge are connected to each other via a convex curved edge that protrudes toward a radially outer side of a center line of the mounting hole.

9. An indexable rotary cutting tool comprising:

the cutting insert according to Claim 1 or 2; and
a holder in which the cutting insert is attachably and detachably mounted and that is configured to rotate about a rotation axis,
wherein the holder includes an insert mounting seat that comes into contact with a flank face for the wiper edge of the cutting insert and with the seating surface.

10. An indexable rotary cutting tool comprising:

a cutting insert having a polygonal plate shape; and
a holder in which the cutting insert is attachably and detachably mounted and that is configured to rotate about a rotation axis,
wherein the cutting insert includes a rake face configured to form one of a pair of polygonal surfaces, a seating surface configured to form the other of the pair of polygonal surfaces, a side surface configured to connect the rake face and the seating surface, and a mounting hole configured to be open to the rake face and the seating surface and to penetrate the cutting insert in a thickness direction,
a cutting edge portion is provided on an intersecting ridgeline between the rake face and the side surface,
the cutting edge portion includes a corner edge and a main cutting edge connected to the corner edge,
the main cutting edge is linear in both of a plan view in which the rake face is viewed as a front and a side view in which the side surface is viewed as a front,

the corner edge includes a first arc edge connected to the main cutting edge and an outermost peripheral arc edge located at an outermost peripheral portion in the corner edge,
the first arc edge and the outermost peripheral arc edge are arc-shaped cutting edges having different radii of curvature in a tool rotation trajectory, and
the holder includes an insert mounting seat that comes into contact with a flank face for the wiper edge of the cutting insert and the seating surface.

11. The indexable cutting tool according to Claim 10,

wherein a radius of curvature Rout of the outermost peripheral arc edge is largest among radii of curvature of a plurality of arc-shaped cutting edges forming the corner edge, and
in a case where a cutting edge length of an entire corner edge is denoted by L2 and a cutting edge length of the outermost peripheral arc edge is denoted by Lout,

$$L2 - Lout < Lout$$

is satisfied.

12. The indexable cutting tool according to Claim 10 or 11,
wherein the corner edge consists of only arc-shaped cutting edges having two types of radii of curvature.

13. The indexable cutting tool according to Claim 10 or 11,

wherein the main cutting edge is a linear cutting edge, and
in a case where a cutting edge length of the main cutting edge is denoted by L1 and an inscribed circle diameter of the rake face is denoted by D1,

$$0.35 \times D1 \leq L1 \leq 0.60 \times D1$$

is satisfied.

14. The indexable cutting tool according to Claim 10 or 11,

wherein the seating surface and the cutting edge portion are parallel to each other in the side view,
the cutting edge portion includes the corner edge, the main cutting edge, a wiper edge adjacent to a side of the main cutting edge opposite to the corner edge, and an inner peripheral arc edge adjacent to a side of the wiper edge opposite to the main cutting edge, and

in a case where a cutting edge length of the main cutting edge is denoted by L1 and a cutting edge length of the wiper edge is denoted by L3,

$$0.25 \leq L3/L1 \leq 0.50$$

is satisfied.

15. The indexable cutting tool according to Claim 10 or 11,
    wherein a radius of curvature Rout of the outermost peripheral arc edge is an integral multiple of 1 mm.

16. The indexable cutting tool according to Claim 10 or 11,

    wherein in the plan view, a virtual line VL perpendicular to the main cutting edge is defined from a center line of the mounting hole, and
    in a case where an intersection of the virtual line VL and the main cutting edge is defined as a point S and an intersection of the virtual line VL and an outer peripheral edge of the mounting hole is defined as a point T,
    a shortest distance L5 between the point S and the point T is larger than a distance L6 from a center line O1 to the point T.

17. The indexable cutting tool according to Claim 10 or 11, further comprising:

    a peripheral cutting edge configured to be connected to a side of the corner edge opposite to the main cutting edge,
    wherein the outermost peripheral arc edge and the peripheral cutting edge are smoothly connected to each other,
    the first arc edge and the main cutting edge are smoothly connected to each other, and
    the main cutting edge and the wiper edge are connected to each other via a convex curved edge that protrudes toward a radially outer side of a center line of the mounting hole.

FIG. 1

FIG. 2

## FIG. 3A

## FIG. 3B

## FIG. 4

## FIG. 5A

## FIG. 5B

FIG. 6

FIG. 7

FIG. 8

# INTERNATIONAL SEARCH REPORT

| International application No. |
|---|
| **PCT/JP2024/012584** |

**A.    CLASSIFICATION OF SUBJECT MATTER**

**B23C 5/20**(2006.01)i; **B23C 5/06**(2006.01)i; **B23C 5/10**(2006.01)i
FI:    B23C5/20; B23C5/06 A; B23C5/10 D

According to International Patent Classification (IPC) or to both national classification and IPC

**B.    FIELDS SEARCHED**

Minimum documentation searched (classification system followed by classification symbols)

B23C5/20; B23C5/06; B23C5/10; B23B27/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2018/012463 A1 (KYOCERA CORPORATION) 18 January 2018 (2018-01-18) paragraphs [0010]-[0089], fig. 1-17 | 1, 3, 6-7, 9-10, 12, 15-16 |
| A | | 2, 4-5, 8, 11, 13-14, 17 |
| A | JP 2022-174559 A (MOLDINO TOOL ENGINEERING, LTD.) 24 November 2022 (2022-11-24) paragraphs [0031]-[0044], fig. 1-3 | 1-17 |
| A | JP 2002-506394 A (SANDVIK AB) 26 February 2002 (2002-02-26) p. 4, line 25 to p. 6, line 27, fig. 1-5 | 1-17 |
| A | Microfilm of the specification and drawings annexed to the request of Japanese Utility Model Application No. 047865/1981 (Laid-open No. 162008/1982) (MURAKAMI, Nobuo) 12 October 1982 (1982-10-12), p. 3, line 4 to p. 7, line 5, fig. 3-4 | 1-17 |
| A | JP 2001-287112 A (HITACHI TOOL ENGINEERING LTD.) 16 October 2001 (2001-10-16) paragraph [0008], fig. 2 | 1-17 |

☑ Further documents are listed in the continuation of Box C.       ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **21 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 691 674 A1**

**INTERNATIONAL SEARCH REPORT**

International application No.

**PCT/JP2024/012584**

### C.     DOCUMENTS CONSIDERED TO BE RELEVANT

| Category* | Citation of document, with indication, where appropriate, of the relevant passages | Relevant to claim No. |
|---|---|---|
| A | JP 2017-164900 A (KYOCERA CORPORATION) 21 September 2017 (2017-09-21) paragraphs [0035]-[0040], fig. 3-5 | 1-17 |

Form PCT/ISA/210 (second sheet) (July 2022)

20

EP 4 691 674 A1

## INTERNATIONAL SEARCH REPORT
### Information on patent family members

International application No.

**PCT/JP2024/012584**

| Patent document cited in search report | | | Publication date (day/month/year) | Patent family member(s) | | | Publication date (day/month/year) |
|---|---|---|---|---|---|---|---|
| WO | 2018/012463 | A1 | 18 January 2018 | US paragraphs [0026]-[0114], fig. 1-17 | 2019/0240740 | A1 | |
| JP | 2022-174559 | A | 24 November 2022 | (Family: none) | | | |
| JP | 2002-506394 | A | 26 February 2002 | US column 2, line 38 to column 3, line 57, fig. 1-5<br>WO | 6244791<br>1999/000207 | B1<br>A1 | |
| JP | 57-162008 | U1 | 12 October 1982 | (Family: none) | | | |
| JP | 2001-287112 | A | 16 October 2001 | (Family: none) | | | |
| JP | 2017-164900 | A | 21 September 2017 | US paragraphs [0049]-[0054], fig. 3-5<br>US<br>WO<br>EP<br>KR 10-2016-0019952 | 2016/0158854<br><br>2018/0154464<br>2015/008724<br>3023183 | A1<br><br>A1<br>A1<br>A1<br>A | |

Form PCT/ISA/210 (patent family annex) (July 2022)

**EP 4 691 674 A1**

## REFERENCES CITED IN THE DESCRIPTION

**Patent documents cited in the description**

- JP 2023053265 A
- JP 2022151053 A